# EUROPEAN PATENT APPLICATION

(11) **EP 4 509 108 A1**
(43) Date of publication of application: **19.02.2025**
(21) Application number: 23868336.1
(22) Date of filing: 07.07.2023
(51) Int. Cl.: A61H 1/02, B25J 9/00, B25J 9/12, B25J 9/10, B25J 13/08

(54) **METHOD FOR CONTROLLING WEARABLE DEVICE FOR SAFETY OF USER AND WEARABLE DEVICE PERFORMING SAME**

(30) Priority: 20.09.2022 KR 20220118946; 14.12.2022 KR 20220175086
(71) Applicant: Samsung Electronics Co., Ltd., Suwon-si, Gyeonggi-do 16677 (KR)
(72) Inventor: KIM, Jeongrae, Suwon-si Gyeonggi-do 16677 (KR); SONG, Sukhoon, Suwon-si Gyeonggi-do 16677 (KR); KIM, Yunjung, Suwon-si Gyeonggi-do 16677 (KR); YU, Jungpil, Suwon-si Gyeonggi-do 16677 (KR); PARK, Jiyoung, Suwon-si Gyeonggi-do 16677 (KR); LEE, Seokjae, Suwon-si Gyeonggi-do 16677 (KR)
(74) Representative: Gulde & Partner
(86) International application number: PCT/KR2023/009679
(87) International publication number: WO 2024/063276

(57) **Abstract**

This wearable device may comprise: a driving module that generates torque applied to the body of a user; a leg driving frame for transferring the generated torque to a leg of the user; a thigh fastening unit that is connected to the leg driving frame and fixes the leg driving frame to the leg of the user; at least one sensor that obtains sensor data including movement information regarding the wearable device; and at least one processor that controls the driving module on the basis of the sensor data. The at least one processor may determine, on the basis of the sensor data obtained using the at least one sensor, information (e.g., a movement score) indicating the degree to which the wearable device moves or has moved, and may control whether to generate the torque on the basis of the determined information (e.g., the movement score).

## Description

### BACKGROUND

### 1. Field

Certain example embodiments relate to a method of controlling a wearable apparatus for user safety and/or a wearable apparatus performing the same.

### 2. Description of Related Art

A walking assistance device generally refers to a machine or a device that helps a patient unable to walk on their own because of diseases, accidents, or other causes with their walking exercises for rehabilitation treatment, and/or which helps a user to exercise. In our current, rapidly aging society, a growing number of people experience inconvenience when walking or have difficulty with normal walking due to malfunctioning joints, and there is increasing interest in walking assistance devices. For example, a walking assistance device may be worn on a body of a user to assist the user in walking by providing muscular strength and/or to induce the user to walk such as in a normal walking pattern.

### SUMMARY

According to an example embodiment, a wearable apparatus configured to be worn on a body of a user may include a driving module (comprising a motor and/or circuitry) configured to generate torque to be applied to the body of the user, a leg driving frame configured to relay the generated torque to a leg of the user, a thigh fastener connected, directly or indirectly, to the leg driving frame and configured to fix/operatively connect the leg driving frame to the leg of the user, a sensor module (comprising at least one sensor) configured to obtain sensor data including motion information of the wearable apparatus, and a control module (comprising processing circuitry) configured to control the driving module based on the sensor data. The control module may be configured to determine, based on sensor data obtained by the sensor module during a time interval, information (e.g., including at least a motion score) indicating a degree to which the wearable apparatus moves and/or moved during the time interval and control whether to generate the torque based on the determined information (e.g., motion score).

According to an example embodiment, a method of controlling a wearable apparatus may include receiving a control command to start driving of the wearable apparatus, in response to the control command being received, obtaining sensor data including motion information of the wearable apparatus via at least a sensor module of the wearable apparatus during a time interval after a point in time at which the control command is received, determining information (e.g., including at least a motion score) indicating a degree to which the wearable apparatus moves and/or moved during the time interval based on the sensor data, and controlling whether a driving module of the wearable apparatus generates torque based on the determined information (e.g., motion score).

According to an example embodiment, a method of controlling a wearable apparatus may include generating torque to be applied to a leg of a user via at least a driving module of the wearable apparatus, obtaining sensor data including motion information of the wearable apparatus via at least a sensor module of the wearable apparatus during a time interval, determining a motion score indicating a degree to which the wearable apparatus moves during the time interval, and determining whether to stop generation of the torque based on the determining motion score.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a diagram illustrating an overview of a wearable apparatus worn on a body of a user, according to an example embodiment;
FIG. 2 is a diagram illustrating a management system including a wearable apparatus and an electronic device, according to an example embodiment;
FIG. 3 is a rear schematic diagram illustrating a wearable apparatus, according to an example embodiment;
FIG. 4 is a left side view illustrating a wearable apparatus, according to an example embodiment;
FIGS. 5A and 5B are diagrams illustrating a configuration of a control system of a wearable apparatus, according to an example embodiment;
FIG. 6 is a diagram illustrating an interaction between a wearable apparatus and an electronic device, according to an example embodiment;
FIG. 7 is a flowchart illustrating a method of controlling a wearable apparatus, according to an example embodiment;
FIG. 8 is a diagram illustrating a change value of a sensor data over time, according to an example embodiment;
FIG. 9 is a diagram illustrating an example of controlling a wearable apparatus based on a sensor data, according to an embodiment;
FIG. 10 is a flowchart illustrating a method of controlling a wearable apparatus, according to an example embodiment;
FIG. 11 is a diagram illustrating an example of controlling a wearable apparatus based on sensor data, according to an example embodiment; and
FIG. 12 is a diagram illustrating a configuration of an electronic device, according to an example embodiment.

### DETAILED DESCRIPTION

The following detailed structural or functional description is provided as an example only and various alterations and modifications may be made to the examples. Here, the examples are not construed as limited to the disclosure and should be understood to include all changes, equivalents, and replacements within the idea and the technical scope of the disclosure.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms used herein including technical or scientific terms have the same meaning as commonly understood by one of ordinary skill in the art to which examples belong. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and a repeated description related thereto will be omitted.

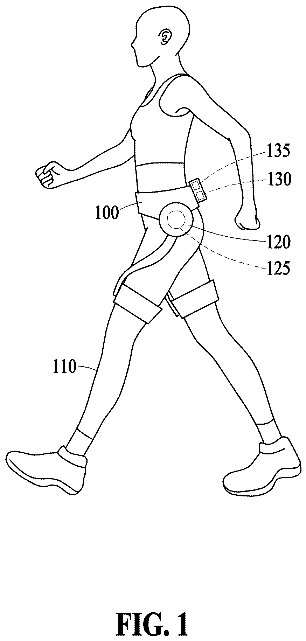

FIG. 1 is a diagram illustrating an overview of a wearable apparatus worn on a body of a user, according to an embodiment.

Referring to FIG. 1, a wearable apparatus 100 may be a device worn on a body of a user 110 to assist the user 110 in walking, exercising, and/or working. In an embodiment, the wearable apparatus 100 may be used to measure a physical ability (e.g., a walking ability, an exercise ability, or an exercise posture) of the user 110. In embodiments, the term "wearable apparatus 100" may be replaced with "wearable robot," "walking assistance device," or "exercise assistance device". The user 110 may be a human or an animal but is not limited thereto. The wearable apparatus 100 may be worn on the body (e.g., a lower body (legs, ankles, knees, etc.) and/or a waist) of the user 110 and apply an external force, such as an assistance force and/or a resistance force, to a body motion of the user 110. The assistance force may be a force assisting the body motion of the user 110, which is applied in the same direction as a direction of the body motion of the user 110. The resistance force may be a force impeding the body motion of the user 110, which is applied in an opposite direction to the direction of the body motion of the user 110. The term "resistance force" may be also referred to as an "exercise load".

In an embodiment, the wearable apparatus 100 may operate in a walking assistance mode for assisting the walking of the user 110. In the walking assistance mode, the wearable apparatus 100 may assist the walking of the user 110 by applying an assistance force generated through a driving module 120 of the wearable apparatus 100 to the body of the user 110. The wearable apparatus 100 may expand a walking ability of the user 110 by allowing the user 110 to walk independently or walk for a long time by providing a force needed for the walking of the user 110. The wearable apparatus 100 may also improve the walking of a user having an improper walking habit or posture.

In an embodiment, the wearable apparatus 100 may operate in an exercise assistance mode to enhance the effect of an exercise on the user 110. In the exercise assistance mode, the wearable apparatus 100 may impede the body motion of the user 110 or resist against the body motion of the user 110 by applying a resistance force generated through the driving module 120 of the wearable apparatus 100 to the body of the user 110. When the wearable apparatus 100 is a hip-type wearable apparatus worn on the waist (or pelvis) of the user 110 and a leg (e.g., a thigh) of the user 110, the wearable apparatus 100 worn on a leg of the user 110 may enhance the effect of an exercise on the leg of the user 110 by providing an exercise load to the motion of the leg of the user 110. Alternatively, the wearable apparatus 100 may apply an assistance force to the body of the user 110 to assist the exercise of the user 110. For example, when a person with disabilities or an elderly person wears the wearable apparatus 100 to exercise, the wearable apparatus 100 may provide an assistance force to assist a body motion in an exercise process. In an embodiment, the wearable apparatus 100 may provide a combination of an assistance force and a resistance force by exercise sessions or time intervals, for example, providing an assistance force in one exercise session and a resistance force in another exercise session.

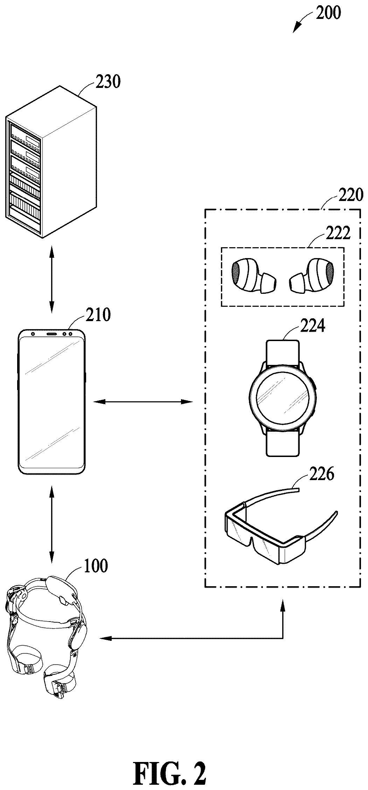

In an embodiment, the wearable apparatus 100 may operate in a physical ability measurement mode (or an exercise ability measurement mode) to measure (including measurement of an exercise ability) a physical ability of the user 110. The wearable apparatus 100 may measure motion information of the user by using one or more sensors (e.g., an angle sensor 125 and an inertial measurement unit (IMU) (or an inertial sensor) 135) included in the wearable apparatus 100 while the user 110 performs walking and exercise, and the wearable apparatus 100 and an electronic device (e.g., an electronic device 210 of FIG. 2) interworking with the wearable apparatus 100 may evaluate a physical ability or an exercise ability of the user based on the measured motion information. For example, a gait index or an exercise ability indicator (e.g., muscular strength, endurance, balance, or exercise motion) of the user 110 may be estimated through the motion information of the user 110 measured by the wearable apparatus 100. The physical ability measurement mode may include an exercise motion evaluation mode to evaluate an exercise motion (or exercise posture) of the user while the user performs exercise.

In example embodiments, for convenience of description, the wearable apparatus 100 is described as an example of a hip-type wearable apparatus, as illustrated in FIG. 1, but the embodiments are not limited thereto. As described above, the wearable apparatus 100 may be worn on body parts (e.g., upper arms, lower arms, hands, calves, or feet) other than the waist and legs (specifically, thighs), and the shape and configuration of the wearable apparatus 100 may vary depending on the body parts on which the wearable apparatus 100 is worn.

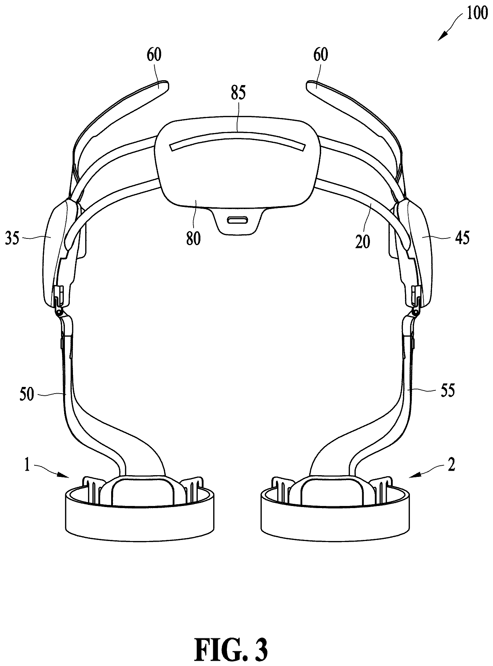

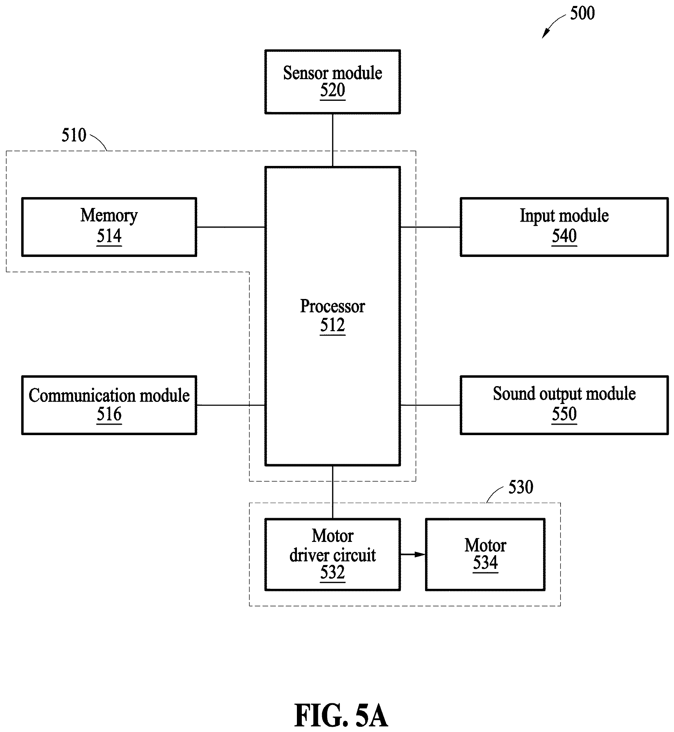

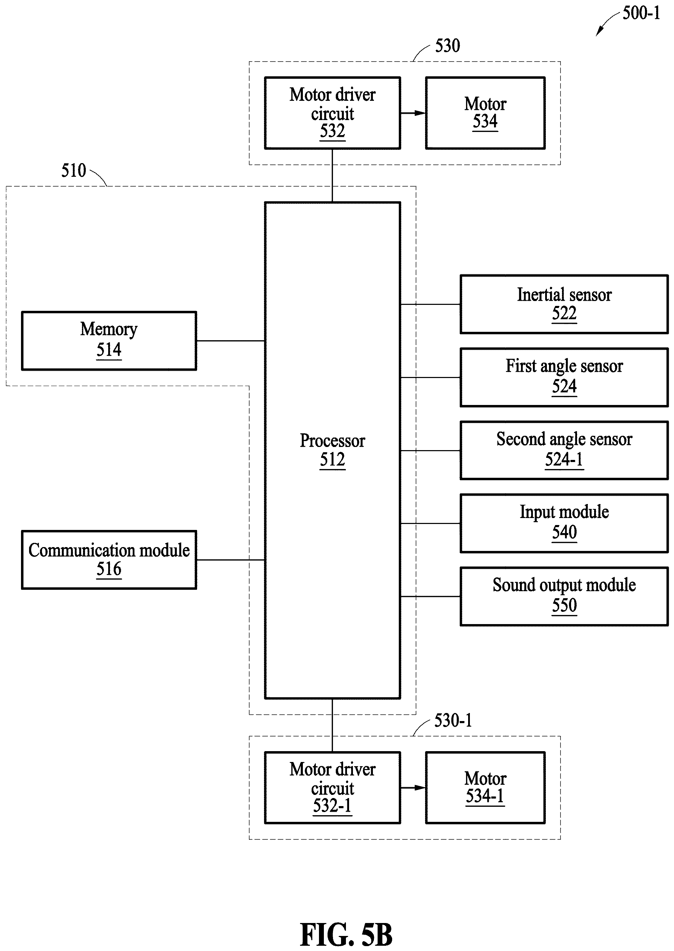

In an embodiment, the wearable apparatus 100 may include a support frame (e.g., a waist support frame 20 of FIG. 3) for supporting the body of the user when the wearable apparatus 100 is worn on the body of the user 110, the driving module 120 (e.g., driving modules 35 and 45 of FIG. 3) for generating torque applied to the leg of the user 110, a leg driving frame (e.g., first and second leg driving frames 55 and 50 of FIG. 3) for relaying the torque generated by the driving module 120 to the leg of the user 110, a sensor module (e.g., a sensor module 520 of FIG. 5A) including one or more sensors for obtaining sensor data including motion information on the body motion (e.g., leg motion or upper body motion) of the user 110, and a control module 130 (e.g., a control module 510 of FIGS. 5A and 5B) for controlling the wearable apparatus 100.

The sensor module may include the angle sensor 125 and the IMU 135. The angle sensor 125 may measure a rotation angle of the leg driving frame of the wearable apparatus 100 corresponding to a hip joint angle value of the user 110. The rotation angle of the leg driving frame measured by the angle sensor 125 may be estimated as the hip joint angle value (or a leg angle value) of the user 110. The angle sensor 125 may include, for example, an encoder and/or a hall sensor. In an embodiment, the angle sensor 125 may be near a position where a motor included by the driving module 120 is connected, directly or indirectly, to the leg driving frame. The inertial sensor 135 may include an acceleration sensor and/or an angular velocity sensor and measure changes in acceleration and/or angular velocity according to the motion of the user 110. The inertial sensor 135 may measure a motion value of a base body (e.g., a base body 80 of FIG. 3) or the waist support frame of the wearable apparatus 100, for example. The motion value of the base body or the waist support frame measured by the inertial sensor 135 may be estimated as an upper body motion value of the user 110.

In an embodiment, the control module 130 and the inertial sensor 135 may be inside the base body (e.g., the base body 80 of FIG. 3) of the wearable apparatus 100. The base body may be on the waist (or a lumbar region) of the user 110 when the user 110 wears the wearable apparatus 100. The base body may be formed on or attached to the outside of the waist support frame of the wearable apparatus 100.

In an embodiment, the control module 130 may control whether the driving module 120 generates torque based on sensor data obtained by the sensor module. For example, when a motion score determined based on the sensor data satisfies a condition (e.g., when a motion score is greater than a threshold value), the control module 130 may allow generation of torque. When the motion score does not satisfy the condition, the control module 130 may not allow the generation of torque or stop generating torque.

In an embodiment, the control module 130 may determine whether the user 110 wears (e.g., properly wears) the wearable apparatus 100 based on the sensor data. When it is determined that the user 110 wears the wearable apparatus 100, the control module 130 may control the driving module 120 to generate the torque. When it is determined that the user 110 does not wear the wearable apparatus 100, the control module 130 may control the driving module 120 to not generate the torque, thereby preventing or reducing chances of a safety-related accident the user 110 may meet while the user 110 does not wear the wearable apparatus 100, wherein the accident may be caused by the leg driving frame moving by the torque generated by the driving module 120. In various embodiments, the case in which it is determined that the user 110 does not wear the wearable apparatus 100 may include a case in which the wearable apparatus 100 is not properly worn as well as a case in which the user 110 does not wear the wearable apparatus 100 at all.

In an embodiment, when the user 110 gives the wearable apparatus 100 a command to start driving but it is determined that the user 110 does not wear the wearable apparatus 100, the control module 130 may control the driving module 120 not to generate the torque despite the command to start driving. In addition, when it is determined that the user 110 does not wear the wearable apparatus 100 while the wearable apparatus 100 is being driven, the control module 130 may stop the driving of the wearable apparatus 100 and control the driving module 120 not to generate the torque.

When the driving module 120 stops generating the torque, the wearable apparatus 100 may provide the user 110 with a guide notification to notify that the wearable apparatus 100 is not properly worn and to guide (or induce) proper wearing of the wearable apparatus 100 through the wearable apparatus 100 or the electronic device (e.g., the electronic device 210 of FIG. 2) interoperating with the wearable apparatus 100. In an embodiment, the guide notification may be provided in such forms as voice guidance output from the wearable apparatus 100 or a pop-up window and/or a sound (or voice) notification displayed on the electronic device. The guide notification may include a guide to how to wear the wearable apparatus 100 desirably.

When the wearable apparatus 100 is driven while the user 110 does not wear the wearable apparatus 100 at all or does not properly wear the wearable apparatus 100, a safety issue that may hurt the user 110 may occur due to the motion of the leg driving frame. According to various embodiments, the wearable apparatus 100 may control the wearable apparatus 100 not to be driven while the wearable apparatus 100 is not properly worn on the body of the user 110. In an embodiment, the wearable apparatus 100 may not immediately generate the torque when the user 110 starts walking or exercising but may generate the torque when it is determined that the user 110 properly wears the wearable apparatus 100 based on a change in sensor data (e.g., sensor data of the angle sensor 125 and sensor data of the inertial sensor 135). When a variation in sensor data measured by the angle sensor 125 while the user 110 walks or exercises is small or when the sensor data of the angle sensor 125 changes only in one direction or only for one leg, the wearable apparatus 100 may determine that the user 110 does not properly wear the wearable apparatus 100 and stop generating the torque. The wearable apparatus 100 may notify the user 110 of an improper wearing state through the guide notification and induce the user 110 to properly wear the wearable apparatus 100.

As described above, the wearable apparatus 100 may generate the torque when proper wearing of the wearable apparatus 100 is confirmed and may not generate the torque or stop generating the torque when the proper wearing is not confirmed, thereby preventing or reducing chances of the leg driving frame of the wearable apparatus 100 from causing harm or injury to the body of the user 110. In an embodiment, control to determine whether the wearable apparatus 100 is properly worn and determine whether to generate (or stop generating) torque may be performed by the electronic device (e.g., the electronic device 210 of FIG. 2).

FIG. 2 is a diagram illustrating an exercise management system including a wearable apparatus and an electronic device, according to an embodiment.

Referring to FIG. 2, an exercise management system 200 may include the wearable apparatus 100, the electronic device 210, other wearable apparatuses 220, and a server 230. In an embodiment, at least one (e.g., the other wearable apparatuses 220 or the server 230) of the components of the exercise management system 200 may be omitted or one or more other devices (e.g., a controller device dedicated to the wearable apparatus 100) may be added.

**In** an embodiment, the wearable apparatus 100 may be worn on a body of a user in a walking assistance mode to assist a motion of the user. For example, the wearable apparatus 100 worn on a leg of the user may assist the user in walking by generating an assistance force to assist the motion of the leg of the user.

**In** an embodiment, to enhance the effect of an exercise on the user in an exercise assistance mode, the wearable apparatus 100 may generate a resistance force to impede body motion of the user or an assistance force to assist the body motion of the user and apply such a force to the body of the user. **In** the exercise assistance mode, through the electronic device 210, the user may select an exercise program (e.g., squat, split lunge, dumbbell squat, lunge and knee up, stretching, etc.) that the user desires to do for exercise by using the wearable apparatus 100 and/or exercise intensity to be applied to the wearable apparatus 100. The wearable apparatus 100 may control a driving module of the wearable apparatus 100 according to the exercise program selected by the user and obtain sensor data including motion information of the user through a sensor module. The wearable apparatus 100 may adjust the intensity of a resistance force or an assistance force applied to the user according to the exercise intensity selected by the user. For example, the wearable apparatus 100 may control the driving module to generate a resistive force corresponding to the exercise intensity selected by the user.

**In** an embodiment, the wearable apparatus 100 may be used to measure a physical ability of the user by interoperating with the electronic device 210. The wearable apparatus 100 may operate in a physical ability measurement mode, that is, a mode for measuring the physical ability of the user, by control of the electronic device 210 and may transmit sensor data obtained through the motion of the user in the physical ability measurement mode to the electronic device 210. The electronic device 210 may evaluate the physical ability of the user by analyzing the sensor data received from the wearable apparatus 100.

The electronic device 210 may communicate with the wearable apparatus 100 and may remotely control the wearable apparatus 100 or provide the user with state information on a state (e.g., a booting state, a charging state, a sensing state, or an error state) of the wearable apparatus 100. The electronic device 210 may receive the sensor data obtained by the sensor module of the wearable apparatus 100 from the wearable apparatus 100 and estimate an exercise result or the physical ability of the user based on the received sensor data. The electronic device 210 may provide the user with the exercise result or the physical ability of the user through a graphical user interface (GUI).

In an embodiment, the user may execute a program (e.g., an application) in the electronic device 210 to control the wearable apparatus 100 and may adjust torque intensity output from the driving module (e.g., the driving modules 35 and 45 of FIG. 3), audio intensity output from a sound output module (e.g., a sound output module 550 of FIGS. 5A and 5B), and brightness of a lighting unit (e.g., a lighting unit 85 of FIG. 3), based on a set value or an operation of the wearable apparatus 100 through the program. The program executed by the electronic device 210 may provide a GUI for interaction with the user. The electronic device 210 may be a device in various forms. For example, the electronic device 210 may include a portable communication device (e.g., a smartphone), a computer device, an access point, a portable multimedia device, or a home appliance (e.g., a television, an audio device, or a projector device), but examples are not limited to the foregoing devices.

In an embodiment, the electronic device 210 may be connected to the server 230 by using short-range wireless communication or cellular communication. The server 230 may receive user profile information of the user of the wearable apparatus 100 from the electronic device 210 and store and manage the received user profile information. The user profile information may include, for example, at least one of a name, an age, a gender, a height, a weight, and a body mass index (BMI). The server 230 may receive exercise history information on an exercise performed by the user from the electronic device 210 and may store and manage the received exercise history information. The server 230 may provide the electronic device 210 with various exercise programs or physical ability measurement programs to be provided to the user.

In an embodiment, the wearable apparatus 100 and/or the electronic device 210 may be connected, directly or indirectly, to the other wearable apparatuses 220. The other wearable apparatuses 220 may include, for example, wireless earphones 222, a smartwatch 224, or smart glasses 226, but examples are not limited to the foregoing devices. **In** an embodiment, the smartwatch 224 may measure a biosignal including heart rate information of the user, and may transmit the measured biosignal to the electronic device 210 and/or the wearable apparatus 100. The electronic device 210 may estimate the heart rate information (e.g., a current heart rate, a maximum heart rate, or an average heart rate) of the user based on the biosignal received from the smartwatch 224 and provide the estimated heart rate information to the user.

In an embodiment, exercise result information, physical ability information, and/or exercise motion evaluation information of the user that is determined by the electronic device 210 may be transmitted to the other wearable apparatuses 220 and provided to the user through the other wearable apparatuses 220. The state information of the wearable apparatus 100 may be transmitted to the other wearable apparatuses 220 and provided to the user through the other wearable apparatuses 220. In an embodiment, the wearable apparatus 100, the electronic device 210, and the other wearable apparatuses 220 may be connected to one another through wireless communication (e.g., Bluetooth^{™} or wireless-fidelity (Wi-Fi) communication).

In an embodiment, the wearable apparatus 100 may provide (or output) feedback (e.g., visual, auditory, or tactile feedback) corresponding to the state of the wearable apparatus 100 according to a control signal received from the electronic device 210. For example, the wearable apparatus 100 may provide visual feedback through the lighting unit (the lighting unit 85 of FIG. 3) and auditory feedback through the sound output module (e.g., the sound output module 550 of FIGS. 5A and 5B).

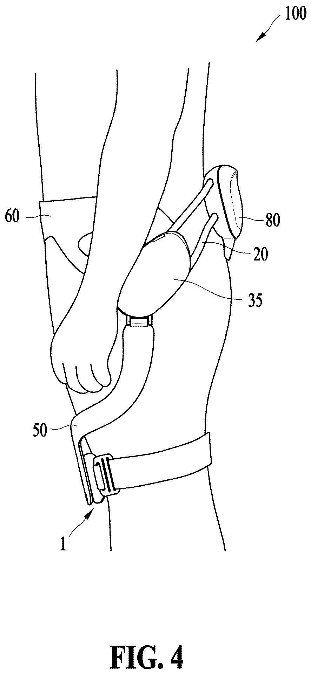

FIG. 3 is a rear schematic diagram illustrating a wearable apparatus according to an embodiment. FIG. 4 is a left side view illustrating a wearable apparatus according to an embodiment.

Referring to FIGS. 3 and 4, the wearable apparatus 100 may include the base body 80, a waist support frame 20, the driving modules 35 and 45, the first and second leg driving frames 55 and 50, first and second thigh fasteners 2 and 1, and a waist fastener 60. The base body 80 may include a lighting unit 85. In an embodiment, at least one (e.g., the lighting unit 85) of the components may be omitted from the wearable apparatus 100, or one or more other components may be added to the wearable apparatus 100.

The base body 80 may be on a waist of a user when the user wears the wearable apparatus 100. The base body 80 worn on the waist of the user may cushion the waist of the user and support the waist of the user. The base body 80 may be above a hip of the user when the user wears the wearable apparatus 100 such that the wearable apparatus 100 may not be deviated downward by gravity. The base body 80 may distribute some of a weight of the wearable apparatus 100 to the waist of the user while wearing the wearable apparatus 100. The base body 80 may be connected, directly or indirectly, to the waist support frame 20. Waist support frame connection elements (not shown) which may be connected, directly or indirectly, to the waist support frame 20 may be at both edges of the base body 80.

In an embodiment, the lighting unit 85 may be on an outer surface of the base body 80. The lighting unit 85 may include a light source (e.g., light emitting diode (LED)). The lighting unit 85 may emit light by control of a processor (not shown) (e.g., a processor 512 of FIGS. 5A and 5B). According to an embodiment, the processor may control the lighting unit 85 to provide (or output) visual feedback corresponding to a state of the wearable apparatus 100.

The waist support frames 20 may support the body (e.g., the waist) of the user when the wearable apparatus 100 is worn on the body of the user. The waist support frame 20 may extend from both edges of the base body 80. The waist of the user may be accommodated inside the waist support frame 20. The waist support frame 20 may include one or more rigid body beams. Each beam may be a curved shape with a preset curvature such that the beam may enclose the waist of the user. A waist fastener 60 may be connected, directly or indirectly, to an edge of the waist support frame 20. The driving modules 35 and 45 may be connected, directly or indirectly, to the waist support frame 20.

In an embodiment, the processor, a memory, an IMU (e.g., the inertial sensor 135 of FIG. 1 or an inertial sensor 522 of FIG. 5B), a communication module (e.g., a communication module 516 of FIGS. 5A and 5B), a sound output module (e.g., the sound output module 550 of FIGS. 5A and 5B) and a battery (not shown) may be inside the base body 80. The base body 80 may protect the components inside the base body 80. The processor may generate a control signal to control an operation of the wearable apparatus 100. The processor may control an actuator of the driving modules 35 and 45. The processor and the memory may be included by a control circuit. The control circuit may further include a power supply circuit to provide power from the battery to each component of the wearable apparatus 100.

In an embodiment, the wearable apparatus 100 may include a sensor module (not shown) (e.g., the sensor module 520 of FIG. 5A) for obtaining sensor data from one or more sensors. The sensor module may obtain the sensor data including motion information of the user and/or motion information of a component of the wearable apparatus 100. The sensor module may include, for example, the IMU (e.g., the inertial sensor 135 of Fig. 1 or the inertial sensor 522 of FIG. 5B) for measuring an upper body motion value of the user or a motion value of the waist support frame 20 and an angle sensor (e.g., the angle sensor 125 of FIG. 1, a first angle sensor 524 of FIG. 5B, or a second angle sensor 524-1 of FIG. 5B) for measuring a hip joint angle value of the user or a motion value of the first and second leg driving frames 55 and 50, but examples are not limited thereto. For example, the sensor module may further include at least one of a position sensor, a temperature sensor, a biosignal sensor, and a proximity sensor.

The waist fastener 60 may be connected, directly or indirectly, to the waist support frame 20 and fix the waist support frame 20 to the waist of the user. The waist fastener 60 may include, for example, a pair of belts.

The driving modules 35 and 45 may generate an external force (or torque) to be applied to the body of the user based on the control signal generated by the processor. For example, the driving modules 35 and 45 may generate an assistance force or a resistance force to be applied to a leg of the user. In an embodiment, the driving modules 35 and 45 may include a first driving module 45 in a position corresponding to a position of a right hip joint of the user and a second driving module 35 in a position corresponding to a position of a left hip joint of the user. The first driving module 45 may include a first actuator and a first joint member, and the second driving module 35 may include a second actuator and a second joint member. The first actuator may provide power to be relayed to the first joint member, and the second actuator may provide power to be relayed to the second joint member. The first actuator and the second actuator may respectively include motors (motors 534 and 534-1 of FIG. 5B) for generating power (or torque) by receiving power from the battery. When driven by receiving power, the motors may generate a force (an assistance force) to assist the body motion of the user or a force (a resistance force) to impede the body motion of the user. In an embodiment, the control module may adjust the intensity and direction of the power generated by the motors by adjusting a voltage and/or a current supplied to the motors.

In an embodiment, the first joint member and the second joint member may receive power respectively from the first actuator and the second actuator and may apply an external force to the body of the user based on the received power. The first joint member and the second joint member may respectively be at positions corresponding to joints of the user. A side of the first joint member may be connected, directly or indirectly, to the first actuator and the other side of the first joint member may be connected, directly or indirectly, to the first leg driving frame 55. The first joint member may rotate by the power relayed from the first actuator. An encoder or a hall sensor that may operate as an angle sensor to measure a rotation angle (corresponding to a joint angle of the user) of the first joint member or the first leg driving frame 55 may be on a side of the first joint member. A side of the second joint member may be connected, directly or indirectly, to the second actuator and the other side of the second joint member may be connected, directly or indirectly, to the second leg driving frame 50. The second joint member may rotate by the power relayed from the second actuator. An encoder or a hall sensor that may operate as an angle sensor to measure a rotation angle of the second joint member or the second leg driving frame 50 may be on a side of the second joint member.

In an embodiment, the first actuator may be in a lateral direction of the first joint member, and the second actuator may be in a lateral direction of the second joint member. A rotation axis of the first actuator and a rotation axis of the first joint member may be spaced apart from each other, and a rotation axis of the second actuator and a rotation axis of the second joint member may also be spaced apart from each other. However, examples are not limited to the foregoing examples, an actuator and a joint member may share a rotation axis. In an embodiment, actuators may respectively be spaced apart from joint members. In this case, the driving modules 35 and 45 may further include a power transmission module (not shown) for relaying power from the actuators to the joint members. The power transmission module may be a rotary body, such as a gear, or a longitudinal member, such as a wire, a cable, a string, a spring, a belt, or a chain. However, the scope of embodiments is not limited by a power relay structure and a positional relationship between the actuators and joint members described above.

In an embodiment, the first and second leg driving frames 55 and 50 may relay torque generated by the driving modules 35 and 45 to the body (e.g., the legs) of the user when the wearable device/apparatus 100 is worn on the legs of the user. The relayed torque may function as an external force applied to the motion of the leg of the user. An edge of the first and second leg driving frames 55 and 50 may be connected, directly or indirectly, to a joint member and rotate, and the other edge of the leg driving frames 50 and 55 may be connected, directly or indirectly, to the first and second thigh fasteners 2 and 1 and relay the torque generated by the driving modules 35 and 45 to thighs of the user while supporting the thighs of the user. For example, the first and second leg driving frames 55 and 50 may push or pull the thigh of the user. The first and second leg driving frames 55 and 50 may extend in a longitudinal direction of the thighs of the user. The first and second leg driving frames 55 and 50 may be bent to wrap around at least some of a circumference of the thighs of the user. The first and second leg driving frames 55 and 50 may include the first leg driving frame 55 to relay torque to a right leg of the user and the second leg driving frame 50 to relay torque to a left leg of the user.

The first and second thigh fasteners 2 and 1 are respectively connected, directly or indirectly, to the first and second leg driving frames 55 and 50 and may fix the wearable apparatus 100 to the legs (specifically, the thighs) of the user. For example, the first and second thigh fasteners 2 and 1 may include the first thigh fastener 2 to fix the wearable apparatus 100 to a right thigh of the user and the second thigh fastener 1 to fix the wearable apparatus 100 to a left thigh of the user.

In an embodiment, the first thigh fastener 2 may include a first cover, a first fastening frame, and a first strap, and the second thigh fastener 1 may include a second cover, a second fastening frame, and a second strap. The first and second covers may apply torque generated by the driving modules 35 and 45 to the thighs of the user. The first and second covers may be at a side of the thighs of the user to push or pull the thighs of the user. The first and second covers may be on a front surface of the thighs of the user. The first and second covers may be in a circumferential direction of the thighs of the user. The first and second covers may extend to both sides around the other edge of the first and second leg driving frames 55 and 50 and may include curved surfaces corresponding to the thighs of the user. An edge of the first and second covers may be connected to a fastening frame and the other edge of the first and second covers may be connected to a strap.

For example, the first and second fastening frames may enclose at least some of the circumference of the thighs of the user to prevent or reduce chances of the thighs of the user from being separated from the wearable apparatus 100. The first fastening frame may have a fastening structure that connects the first cover to the first strap, and the second fastening frame may have a fastening structure that connects the second cover to the second strap.

The first strap may enclose the rest of the circumference of the right thigh of the user, which the first cover and the first fastening frame do not enclose, and the second strap may enclose the rest of the circumference of the left thigh of the user, which the second cover and the second fastening frame do not enclose. The first and second straps may include, for example, an elastic material (e.g., a band).

FIGS. 5A and 5B are diagrams illustrating a configuration of a control system of a wearable apparatus according to an embodiment.

Referring to FIG. 5A, a wearable apparatus (e.g., the wearable apparatus 100) may be controlled by a control system 500. The control system 500 may include a control module 510, a communication module 516, a sensor module 520, a driving module 530, an input module 540, and a sound output module 550. The driving module 530 may include a motor 534 to generate power (e.g., torque) and a motor driver circuit 532 to drive the motor 534. Although FIG. 5A illustrates the driving module 530 including one motor driver circuit 532 and one motor 534, the example of FIG. 5A is merely an example. Referring to FIG. 5B, a control system 500-1 may include a plurality (two or more) of motor driver circuits (e.g., motor driver circuits 532 and 532-1) and motors (e.g., the motors 534 and 534-1). The driving module 530 including the motor driver circuit 532 and the motor 534 may correspond to the first driving module 45 of FIG. 3, and a driving module 530-1 including the motor driver circuit 532-1 and the motor 534-1 may correspond to the second driving module 35 of FIG. 3. The following descriptions of the motor driver circuit 532 and the motor 534 may also be respectively applicable to the motor driver circuit 532-1 and the motor 534-1 illustrated in FIG. 5B.

Referring to FIG. 5A, the sensor module 520 may include at least one sensor. The sensor module 520 may obtain sensor data including motion information of a user or motion information of the wearable apparatus. The sensor module 520 may transmit the obtained sensor data to the control module 510. The sensor module 520 may include an inertial sensor 522 and an angle sensor (e.g., a first angle sensor 524 and a second angle sensor 524-1) as illustrated in FIG. 5B. The inertial sensor 522 may measure an upper body motion value of the user. For example, the inertial sensor 522 may sense acceleration and angular velocity of an X-axis, a Y-axis, and a Z-axis according to a motion of the user. In addition, the inertial sensor 522 may obtain a motion value (e.g., an acceleration value and an angular velocity value) of a waist support frame of the wearable apparatus. The angle sensor may measure a hip joint angle value according to a motion of a leg of the user. Sensor data that may be measured by the angle sensor may include, for example, a hip joint angle value of a right leg, a hip joint angle value of a left leg, and information on a motion direction of a leg. The first angle sensor 524 of FIG. 5B may obtain the hip joint angle value of the right leg of the user and the second angle sensor 524-1 may obtain the hip joint angle value of the left leg of the user. The first angle sensor 524 and the second angle sensor 524-1 may each include, for example, an encoder and/or a hall sensor. In addition, the first and second angle sensors 524 and 524-1 may obtain a motion value of a leg driving frame of the wearable apparatus. For example, the first angle sensor 524 may obtain a motion value of the first leg driving frame 55 and the second angle sensor 524-1 may obtain a motion value of the second leg driving frame 50.

In an embodiment, the sensor module 520 may further include a position sensor, a proximity sensor, a biosignal sensor, and a temperature sensor, in which the position sensor may obtain a position value of the wearable apparatus, the proximity sensor may detect the proximity of an object, the biosignal sensor may detect a biosignal of the user, and the temperature sensor may sense an ambient temperature.

The input module 540 may receive a command or data to be used by another component (e.g., a processor 512) of the wearable apparatus from the outside (e.g., the user) of the wearable apparatus. The input module 540 may include, for example, a key (e.g., a button) or a touch screen.

The sound output module 550 may output a sound signal to the outside of the wearable apparatus. The sound output module 550 may include a guide sound signal (e.g., a driving start sound or an operation error notification sound) and a speaker for playing music content or a guide voice.

In an embodiment, the control system 500 may further include a battery (not shown) to supply power to each component of the wearable apparatus. The wearable apparatus may convert the power of the battery into power suitable for an operating voltage of each component of the wearable apparatus and supply the converted power to each component.

The driving module 530 may generate an external force to be applied to the leg of the user by control of the control module 510. The driving module 530 may be in a position corresponding to a position of a hip joint of the user and may generate torque to be applied to the leg of the user based on a control signal generated by the control module 510. The control module 510 may transmit the control signal to the motor driver circuit 532, and the motor driver circuit 532 may control an operation of the motor 534 by generating a current signal (or a voltage signal) corresponding to the control signal and supplying the current signal (or the voltage signal) to the motor 534. The current signal may not be supplied to the motor 534 according to the control signal. When the current signal is supplied to the motor 534, and the motor is driven, the motor 534 may generate a force to assist a leg motion of the user or torque to impede the leg motion of the user.

The control module 510 may control the overall operation of the wearable apparatus and may generate a control signal to control each component (e.g., the driving module 530). The control module 510 may include a processor 512 and a memory 514.

The processor 512 may execute, for example, software to control at least one other component (e.g., a hardware or software component) of the wearable apparatus connected, directly or indirectly, to the processor 512 and may perform various types of data processing or operations. According to an embodiment, as at least a part of data processing or computation, the processor 512 may store instructions or data received from another component (e.g., the communication module 516) in the memory 514, may process the instructions or the data stored in the memory 514, and may store result data in the memory 514. According to an embodiment, the processor 512 may include a main processor (e.g., a central processing unit (CPU) or an application processor (AP)) or an auxiliary processor (e.g., a graphics processing unit (GPU), a neural processing unit (NPU), an image signal processor (ISP), a sensor hub processor, or a communication processor (CP)) that is operable independently of, or in conjunction with the main processor. The auxiliary processor may be implemented separately from the main processor or as a part of the main processor.

The memory 514 may store a variety of data used by at least one component (e.g., the processor 512) of the control module 510. The variety of data may include, for example, software, sensor data, input data, or output data for instructions related thereto. The memory 514 may include a volatile memory or a non-volatile memory (e.g., a random-access memory (RAM), a dynamic RAM (DRAM), or a static RAM (SRAM)).

The communication module 516 may support establishing a direct (e.g., wired) communication channel or a wireless communication channel between the control module 510 and another component of the wearable apparatus 100 or an external electronic device (e.g., the electronic device 210 or the other wearable apparatuses 220 of FIG. 2), and performing communication via the established communication channel. For example, the communication module 516 may transmit the sensor data obtained by the sensor module 520 to the external electronic device (e.g., the electronic device 210 of FIG. 2) and receive a control signal from the external electronic device. The communication module 516 may include one or more CPs that are operable independently of the processor 512 and that support a direct (e.g., wired) communication or a wireless communication. According to an embodiment, the communication module 516 may include a wireless communication module (e.g., a cellular communication module, a short-range wireless communication module, or a global navigation satellite system (GNSS) communication module), and/or a wired communication module. A corresponding one of these communication modules may communicate with another component of the wearable apparatus and/or an external electronic device via a short-range communication network, such as Bluetooth^{™}, Wi-Fi, an ANT or infrared data association (IrDA), or a long-range communication network, such as a legacy cellular network, a fifth generation (5G) network, a next-generation communication network, the Internet, or a computer network (e.g., a local area network (LAN) or a wide region network (WAN).

**In** an embodiment, the wearable apparatus 100 may include the driving module 530, 530-1 for generating torque to be applied to a body of the user, the first and second leg driving frames 55 and 50 for relaying the generated torque to legs of the user, the first and second thigh fasteners 2 and 1 that are respectively connected to the first and second leg driving frames 55 and 50 and for fixing the first and second leg driving frames 55 and 50 respectively to the legs of the user, the sensor module 520 for obtaining sensor data including motion information of the wearable apparatus 100, and the control module 510 for controlling the driving module 530, 530-1 based on the sensor data. The sensor module 520 may include the first and second angle sensors 524 and 524-1 that obtain sensor data including motion values of the first and second leg driving frames 55 and 50 and the inertial sensor 522 that obtains sensor data including a motion value (e.g., an acceleration value and/or an angular velocity value) of the waist support frame 20 of the wearable apparatus 100.

In an embodiment, the control module 510 may perform a test to determine whether the wearable apparatus 100 is correctly or properly worn on the body of the user based on sensor data of the sensor module 520. The control module 510 may control a guide notification regarding the performance of the test to be provided to the user before performing the test. The control module 510 may control the sound output module 550 to output a guide voice saying "We are going to test if the wearable apparatus is being worn. Please walk comfortably while wearing the wearable apparatus." To the user.

The control module 510 may perform the test based on the sensor data of the first angle sensor 524, the second angle sensor 524-1, and the inertial sensor 522. When it is determined that a sensor value of each of the first angle sensor 524, the second angle sensor 524-1, and the inertial sensor 522 sufficiently changes during the last three seconds and that the user walks three steps or more at the beginning of driving of the wearable apparatus 100 (e.g., when the user desires to start walking or exercising using the wearable apparatus 100), the control module 510 may control the driving module 530, 530-1 to generate torque. A sufficient change in the sensor value may indicate a sufficient change in both directions, not just one direction.

In an embodiment, when it is determined that the sensor value of each of the first angle sensor 524, the second angle sensor 524-1, and the inertial sensor 522 does not sufficiently change during the last five seconds or that the user sits for three seconds or more while the user performs walking or exercise after the wearable apparatus 100 starts to be driven, the control module 510 may control the driving module 530, 530-1 to stop generating the torque. A sufficient change in the sensor value may indicate a sufficient change in both directions, not just one direction. Determination of whether to stop the generation of torque may be performed periodically (or aperiodically) during the driving of the wearable apparatus 100.

The control module 510 may determine a motion score indicating a degree to which the wearable apparatus 100 moves during a time interval based on sensor data obtained by the sensor module 520 during the time interval. A time interval may be a predefined time interval from a point in time at which the test starts and a length of the defined time interval may vary. A time interval may be adjusted to be optimized for a user.

In an embodiment, the control module 510 may control whether the driving module 530, 530-1 generates the torque based on the determined motion score. The control module 510 may determine whether the user properly wears the wearable apparatus 100 based on the motion score. When it is determined that the user improperly wears the wearable apparatus 100, the control module 510 may control the driving module 530, 530-1 to not generate the torque or to stop generating the torque.

A point in time at which the test starts to determine the motion score may vary. For example, in response to the wearable apparatus 100 receiving a control command to start driving from the electronic device 210, the control module 510 may determine the motion score based on sensor data obtained during a time interval (e.g., three seconds) after the point in time at which the control command is received. As another example, in response to a motion of the wearable apparatus 100 being detected after the wearable apparatus 100 is initially powered on, the control module 510 may determine the motion score based on sensor data obtained during the time interval (e.g., three seconds) after a point in time at which the motion is detected. For example, when the wearable apparatus 100 is powered on, the control module 510 may determine the motion score based on sensor data obtained during the time interval from a point in time at which motions of the first and second leg driving frames 55 and 50 are detected or from a point in time at which a predetermined number of steps (e.g., two or three steps) of the user is detected. As another example, the control module 510 may periodically or aperiodically perform the test not only before the wearable apparatus 100 starts its operation but also during its operation. The control module 510 may determine the motion score based on sensor data obtained during the time interval (e.g., three seconds) while torque is being generated by the driving module 530, 530-1.

In an embodiment, the control module 510 may determine the motion score based on at least one of the sensor data of the first and second angle sensors 524 and 524-1 and the sensor data of the inertial sensor 522.

In an embodiment, the control module 510 may determine a first cumulative value for a first angular variation of the first leg driving frame 55 and a second cumulative value for a second angular variation of the second leg driving frame 50 based on the sensor data of the first and second angle sensors 524 and 524-1 and determine the motion score based on the first cumulative value and the second cumulative value. The first cumulative value may correspond to a smaller cumulative value between a cumulative value of a positive first angular variation measured during the time interval and a cumulative value of a negative first angular variation measured during the time interval. The second cumulative value may correspond to a smaller cumulative value between a cumulative value of a positive second angular variation measured during the time interval and a cumulative value of a negative second angular variation measured during the time interval. The motion score may be based on a result value obtained by multiplying the first cumulative value and the second cumulative value. For example, the motion score may correspond to the result value obtained by multiplying the first cumulative value and the second cumulative value or a result value of weighted multiplication. However, the motion score calculation method is not limited thereto.

In an embodiment, the control module 510 may further determine a third cumulative value of a first motion variation in a first axis (e.g., an X-axis) direction of the waist support frame 20, a fourth cumulative value of a second motion variation in a second axis (e.g., a Y-axis) direction of the waist support frame 20, and a fifth cumulative value of a third motion variation in a third axis (e.g., a Z-axis) direction of the waist support frame 20 based on a motion value (e.g., an acceleration value) of the waist support frame 20 and determine the motion score based on the first cumulative value, the second cumulative value, the third cumulative value, the fourth cumulative value, and the fifth cumulative value. The third cumulative value may correspond to a smaller cumulative value between a cumulative value of a positive first motion variation measured during the time interval and a cumulative value of a negative first motion variation measured during the time interval. The fourth cumulative value may correspond to a smaller cumulative value between a positive second motion variation measured during the time interval and a negative second motion variation measured during the time interval. The fifth cumulative value may correspond to a smaller cumulative value between a cumulative value of a positive third motion variation measured during the time interval and a cumulative value of a negative third motion variation measured during the time interval. The motion score may be based on a result value obtained by multiplying the first cumulative value, the second cumulative value, the third cumulative value, the fourth cumulative value, and the fifth cumulative value. For example, the motion score may correspond to the result value obtained by multiplying the first cumulative value, the second cumulative value, the third cumulative value, the fourth cumulative value, and the fifth cumulative value or a result value of weighted multiplication. However, the motion score calculation method is not limited thereto. Each of the first cumulative value, the second cumulative value, the third cumulative value, the fourth cumulative value, and the fifth cumulative value is a variation that occurs in a direction opposite to a direction in which a substantial variation occurs in the sensor data and may be considered as corresponding to actual kinetic energy. As at least one of the first cumulative value, the second cumulative value, the third cumulative value, the fourth cumulative value, and the fifth cumulative value is closer to 0, the motion score may be closer to 0. In an embodiment, the first cumulative value, the second cumulative value, the third cumulative value, the fourth cumulative value, and the fifth cumulative value may be values that are converted to be expressed in radians as a unified unit.

In certain example embodiments, positive angular and motion variations may represent a variation in a first direction (e.g., a front direction) with respect to the user, and negative angular and motion variations may represent a variation in a second direction (e.g., a rear direction) with respect to the user, in which the second direction is opposite to the first direction.

In an embodiment, the control module 510 may control torque generation by the driving module 530, 530-1 based on the motion score and a threshold value. In response to the motion score being greater than the threshold value, the control module 510 may control the driving module 530, 530-1 to start its operation or to continue operating in order to generate torque. When the motion score is greater than the threshold value, it may indicate that the user properly wears the wearable apparatus 100. When the motion score is less than or equal to the threshold value, it may indicate that the user does not properly wear the wearable apparatus 100.

In an embodiment, in response to the motion score being less than or equal to the threshold value, the control module 510 may control the driving module 530, 530-1 to not generate the torque or stop generating the torque. If a result of performing the test while the driving module 530, 530-1 is being driven determines that the motion score is less than or equal to the threshold value, the control module 510 may cut off power supplied to the driving module 530, 530-1 or control the driving module 530, 530-1 to not generate the torque.

In an embodiment, in response to the motion score being less than or equal to the threshold value, the control module 510 may control the guide notification (e.g., a guide voice to induce proper wearing) to guide proper wearing of the wearable apparatus 100 to be provided to the user. The guide notification may be provided to the user through the electronic device 210.

In an embodiment, the control module 510 may determine a first motion score based on at least one of the first angular variation of the first leg driving frame 55 and the second angular variation of the second leg driving frame 50 during the time interval. The control module 510 may determine a second motion score based on at least one of a first proportion of a motion amount of the first leg driving frame 55 and a second proportion of a motion amount of the second leg driving frame 50 to a total motion amount of both the first leg driving frame 55 and the second leg driving frame 50. The control module 510 may control whether to generate the torque based on the first motion score and the second motion score. For example, in response to the first motion score being greater than a first threshold value and the second motion score being greater than a second threshold value, the control module 510 may control the driving module 530, 530-1 to start its operation or continue operating in order to generate the torque. In response to the first motion score being less than or equal to the first threshold value and the second motion score being less than or equal to the second threshold value, the control module 510 may control the driving module 530, 530-1 to not generate the torque or to stop generating the torque.

In an embodiment, a cumulative value of a positive first angular variation may correspond to a cumulative value of an angular variation of the first leg driving frame 55 generated by a right leg of the user moving forward relative to the user. A cumulative value of a negative first angular variation may correspond to a cumulative value of an angular variation of the first leg driving frame 55 generated by the right leg of the user moving backward relative to the user. The cumulative value of the positive first motion variation may correspond to a cumulative value of a first motion variation of the waist support frame 20 generated by a motion of an upper body of the user towards a front direction (e.g., +X-axis direction). The cumulative value of the negative first motion variation may correspond to a cumulative value of a first motion variation of the waist support frame 20 generated by a motion of the upper body of the user towards a rear direction (e.g., -X-axis direction). The control module 510 may obtain information on an actual motion of the user by dividing a cumulative value based on sensor data into a positive cumulative value and a negative cumulative value depending on a direction in which the user moves.

A small motion score may indicate that a motion amount of a leg and/or the upper body of the user is small, and a large motion score may indicate that a motion amount of the leg and/or the upper body of the user is relatively large. If at least one of the leg or the upper body does not move or barely moves, the motion score may be significantly small, and the control module 510 may identify a state in which a leg motion and/or an upper body motion of the user is small by comparing the motion score with the threshold value. When it is determined that the motion score of the wearable apparatus 100 is less than or equal to the threshold value, the control module 510 may determine that the wearable apparatus 100 is not properly worn on the body of the user and may prevent the driving module 530, 530-1 from generating the torque.

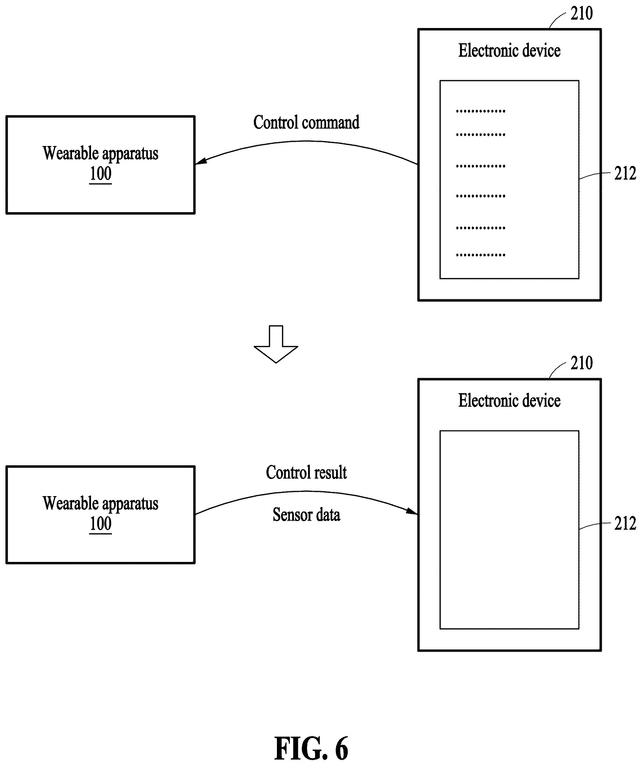

FIG. 6 is a diagram illustrating an interaction between a wearable apparatus and an electronic device according to an embodiment.

Referring to FIG. 6, the wearable apparatus 100 may communicate with the electronic device 210. For example, the electronic device 210 may be a user terminal of a user using the wearable apparatus 100 or a controller device dedicated to the wearable apparatus 100. In an embodiment, the wearable apparatus 100 and the electronic device 210 may be connected to each other through short-range wireless communication (e.g., Bluetooth^{™} or Wi-Fi communication).

In an embodiment, the electronic device 210 may check a state of the wearable apparatus 100 or execute an application to control or operate the wearable apparatus 100. A screen of a user interface (UI) may be displayed to control an operation of the wearable apparatus 100 or determine an operation mode of the wearable apparatus 100 on a display 212 of the electronic device 210 through the execution of the application. The UI may be, for example, a GUI.

In an embodiment, a user may input a command (e.g., a command to execute a walking assistance mode, an exercise assistance mode, or a physical ability measurement mode) to control the operation of the wearable apparatus 100 or change a setting of the wearable apparatus 100 through a GUI screen on the display 212 of the electronic device 210. The electronic device 210 may generate a control command (or a control signal) corresponding to an operation control command or setting change command input by the user and transmit the generated control command to the wearable apparatus 100. The wearable apparatus 100 may operate according to the received control command and transmit a control result according to the received control command and/or sensor data sensed by a sensor module of the wearable apparatus 100 to the electronic device 210. The electronic device 210 may provide the user with result information (e.g., gait ability information, exercise ability information, or exercise motion evaluation information) derived by analyzing the control result and/or the sensor data through the GUI screen.

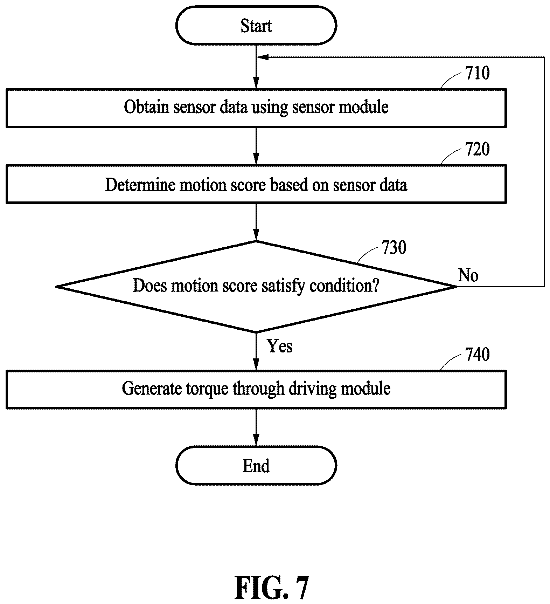

FIG. 7 is a flowchart illustrating a method of controlling a wearable apparatus according to an embodiment.

FIG. 7 is a flowchart illustrating operations of a control method of the wearable apparatus 100, when starting operation, for determining whether a user properly wears the wearable apparatus 100 to control driving of the wearable apparatus 100 depending on whether the wearable apparatus 100 is properly worn. In an embodiment, at least one of the operations of FIG. 7 may be simultaneously or parallelly performed with one another, and the order of the operations may be changed. In addition, at least one of the operations may be omitted, or another operation may be additionally performed.

The wearable apparatus 100 may receive a control command to start driving of the wearable apparatus 100. The wearable apparatus 100 may receive the control command from the electronic device 210 or a user input received through the input module 540 of the wearable apparatus 100. For example, a user may select a desired operation mode (e.g., a walking assistance mode and an exercise assistance mode) for the wearable apparatus 100 through an application installed on the electronic device 210, and the electronic device 210 may transmit a control command to start driving for the selected operation mode to the wearable apparatus 100.

In operation 710, in response to receiving the control command, the wearable apparatus 100 may obtain sensor data including motion information of the wearable apparatus 100 using the sensor module 520 of the wearable apparatus 100 during a time interval after a point in time at which the control command is received.

As described above, the sensor module 520 may include the first and second angle sensors 524 and 524-1 that obtain sensor data including a motion value of the first and second leg driving frames 55 and 50 and the inertial sensor 522 that obtains sensor data including a motion value of the waist support frame 20 of the wearable apparatus 100.

In operation 720, the wearable apparatus 100 may determine a motion score indicating a degree to which the wearable apparatus 100 moves during the time interval based on the sensor data. For example, the wearable apparatus 100 may determine the motion score based on sensor data for the last three seconds. The phrase "three seconds" is provided merely as an example.

In an embodiment, the wearable apparatus 100 may determine a first cumulative value for a first angular variation of the first leg driving frame 55 and a second cumulative value for a second angular variation of the second leg driving frame 50 based on sensor data of the first and second angle sensors 524 and 524-1 and determine the motion score based on the first cumulative value and the second cumulative value.

According to an embodiment, the wearable apparatus 100 may determine not only the first cumulative value and the second cumulative value but also a third cumulative value of a first motion variation in a first axis direction of the waist support frame 20 of the wearable apparatus 100, a fourth cumulative value of a second motion variation in a second axis direction of the waist support frame 20, and a fifth cumulative value of a third motion variation in a third axis direction of the waist support frame 20 based on sensor data of the inertial sensor 522. The wearable apparatus 100 may determine the motion score based on the first cumulative value, the second cumulative value, the third cumulative value, the fourth cumulative value, and the fifth cumulative value.

In operation 730, the wearable apparatus 100 may determine whether the motion score satisfies a condition. For example, the wearable apparatus 100 may determine whether the motion score is greater than a threshold value. When the motion score is greater than a threshold value, it may be determined that the condition is satisfied, and when the motion score is less than or equal to the threshold value, it may be determined that the condition is not satisfied. The wearable apparatus 100 may determine whether the user properly wears the wearable apparatus 100 based on the motion score. When the motion score is greater than the threshold value, it may be determined that the user properly wears the wearable apparatus 100, and when the motion score is less than or equal to the threshold value, it may be determined that the user does not properly wear the wearable apparatus 100.

The wearable apparatus 100 may control whether the driving module 530, 530-1 of the wearable apparatus 100 generates torque based on the determined motion score. When the motion score does not satisfy the condition ('No' in operation 730), the wearable apparatus 100 may control the driving module 530, 530-1 to not generate torque and return to operation 710 to perform an operation of obtaining the sensor data during the time interval through the sensor module again. When the motion score satisfies the condition ('Yes' in operation 730), the wearable apparatus 100, in operation 740, may generate the torque through the driving module 530, 530-1. The wearable apparatus 100 may start driving according to the operation mode selected by the user.

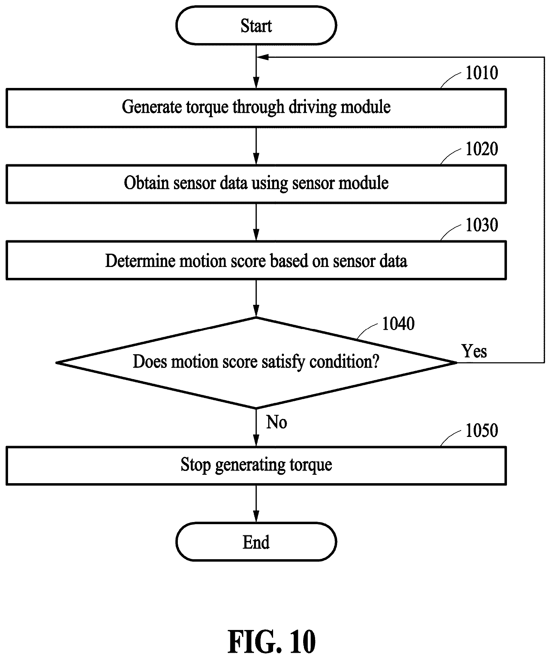

In an embodiment, when the wearable apparatus 100 starts to operate properly and the torque starts to be generated through the driving module 530, 530-1, the wearable apparatus 100 may periodically or aperiodically determine the motion score based on the sensor data, as in the above-described method, and determine whether the user properly wears the wearable apparatus 100 based on the motion score. When it is determined that the user does not properly wear the wearable apparatus 100, the wearable apparatus 100 may stop the operation of the active driving module 530, 530-1 and stop the generation of the torque. The control method while the wearable apparatus 100 is being driven is described in detail with reference to FIG. 10.

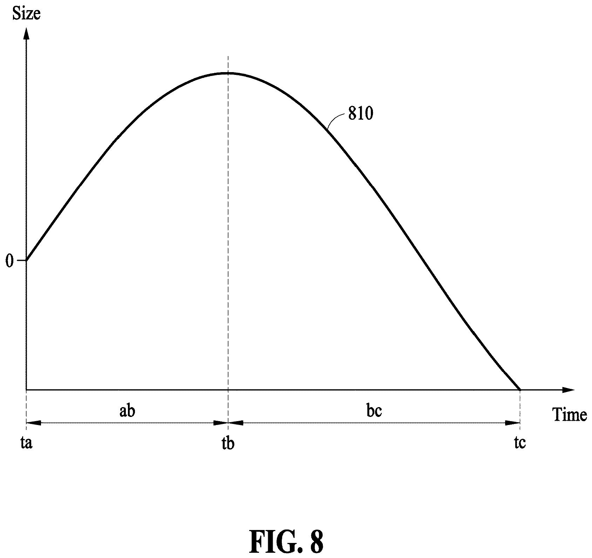

FIG. 8 is a diagram illustrating a change value of a sensor data over time according to an embodiment.

According to an embodiment, the sensor module 520 included in the wearable apparatus 100 may include the inertial sensor 522 and the first and second angle sensors 524 and 524-1. The first and second angle sensors 524 and 524-1 may measure a change in an angle according to motions of the first and second leg driving frames 55 and 50 corresponding to a motion of a leg of a user. For example, the first and second angle sensors 524 and 524-1 may measure a first angle for the first leg driving frame 55 and a second angle for the second leg driving frame 50. The control module 510 may determine a first cumulative value for a first angular variation of the first leg driving frame 55 and a second cumulative value for a second angular variation of the second leg driving frame 50 based on the measured angle data.

The inertial sensor 522 may measure a change in acceleration and/or a rotation velocity according to a motion of the waist support frame 20 corresponding to a motion of an upper body (or a waist) of the user. For example, the inertial sensor 522 may measure acceleration in a first axis direction, acceleration in a second axis direction, and acceleration in a third axis direction according to the motion of the waist support frame 20. The control module 510 may determine a third cumulative value of a first motion variation in the first axis direction, a fourth cumulative value of a second motion variation in the second axis direction, and a fifth cumulative value of a third motion variation in the third axis direction based on the measured acceleration data.

A graph 810 illustrated in FIG. 8 may be, for example, a graph representing a change in one of the first cumulative value of the first angular variation, the second cumulative value of the second angular variation, the third cumulative value of the first motion variation, the fourth cumulative value of the second motion variation, and the fifth cumulative value of the third motion variation over time. Hereinafter, it is assumed that the graph 810 represents a change in the first cumulative value of the first angular variation over time for ease of description.

In an embodiment, the user may initially wear the wearable apparatus 100 and be in a stationary state at a time ta. Thereafter, the user may command the wearable apparatus 100 to start driving through manipulation of an application of the electronic device 210 or the input module 540 of the wearable apparatus 100 and may move while wearing the wearable apparatus 100. For example, the user may stretch a right leg forward or take a step forward while wearing the wearable apparatus 100 for a walking motion between the time ta and a time tb. Between the time ta and the time tb, the first cumulative value for the first angular variation of the first leg driving frame 55 may indicate a positive first angular variation. Accordingly, the first cumulative value may gradually increase in an interval from the time ta to the time tb.

The user may stretch the right leg until the time tb, raise the right leg at a maximum or high angle at the time tb and start lowering the right leg. The right leg of the user may start moving in a rear direction of the user when the maximum or high angle is achieved. From this point onward, the first angular variation of the first leg driving frame 55 may indicate a negative first angular variation. Accordingly, the first cumulative value may gradually decrease from the time tb. The first cumulative value may gradually decrease until the right leg reaches its maximum or a high angle in the rear direction.

In an embodiment, the wearable apparatus 100 may determine the motion score based on sensor data obtained during an interval from the time ta to a time tc corresponding to the time interval in the graph 810 and determine whether to generate the torque through the driving module 530, 530-1 based on the motion score. For example, the interval from the time ta to the time tc may be a time interval of three seconds after a motion is detected while the user wears the wearable apparatus 100, but is not limited thereto.

The wearable apparatus 100 may determine the first cumulative value for the first angular variation of the first leg driving frame 55 in the time interval corresponding to the interval from the time ta to the time tc based on the sensor data. The first cumulative value for the first angular variation measured in the time interval may include a cumulative value for the first angular variation of the first leg driving frame 55 in a front direction with respect to the user and a cumulative value for the first angular variation of the first leg driving frame 55 in a rear direction with respect to the user. The wearable apparatus 100 may determine the motion score based on a smaller value between a cumulative value of a variation in a motion of the first leg driving frame 55 in a positive direction (a front direction with respect to the user) measured from the time ta to the time tb and a cumulative value of a variation in a motion of the first leg driving frame 55 in a negative direction (a rear direction with respect to the user) measured from the time tb to the time tc.

The wearable apparatus 100 may determine the second cumulative value, the third cumulative value, the fourth cumulative value, and the fifth cumulative value in a way that is similar to the manner in which the first cumulative value for the first angular variation is determined in the time interval.

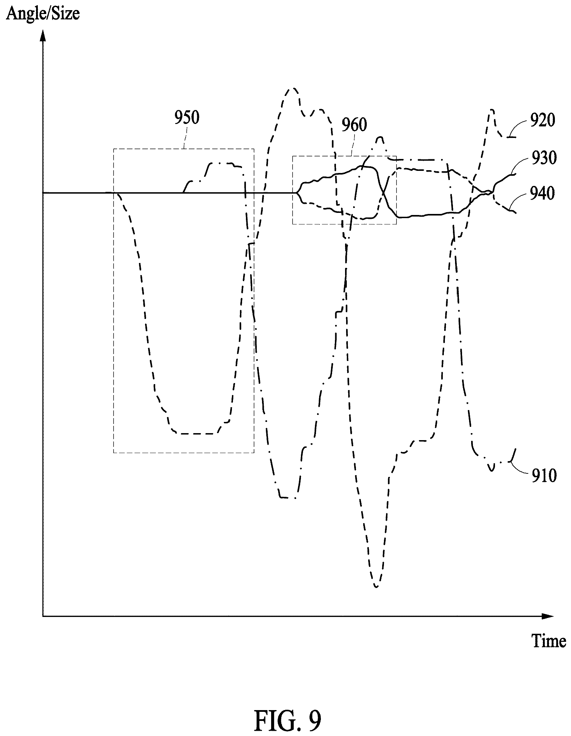

FIG. 9 is a diagram illustrating an example of controlling a wearable apparatus based on a sensor data according to an embodiment.

FIG. 9 illustrates first sensor data 920 representing a change in a first angle of the first leg driving frame 55 of the wearable apparatus 100, second sensor data 910 representing a change in a first angle of the second leg driving frame 50, first torque data 940 representing a change in first torque to be transmitted to the first leg driving frame 55 by the driving module 530, 530-1, and second torque data 930 representing a change in second torque to be transmitted to the second leg driving frame 50 by the driving module 530, 530-1.

In an embodiment, a user may initially wear the wearable apparatus 100 to use the wearable apparatus 100 and select an exercise (or walking) start through an application of the electronic device 210. The user may move a body of the user by following a motion guide requested by the application while wearing the wearable apparatus 100. In this case, as shown in a time interval 950, a change in the first sensor data 920 and a change in the second sensor data 910 may be detected by the sensor module 520 of the wearable apparatus 100. The wearable apparatus 100 may not immediately generate torque through the driving module 530, 530-1 even when a body motion of the user is detected at the beginning of the use of the wearable apparatus 100 but first check whether the user properly wears the wearable apparatus 100 before generating torque. For example, as described with reference to FIGS. 5 and 7, the wearable apparatus 100 may perform a test to determine whether the user properly wears the wearable apparatus 100. The wearable apparatus 100 may determine whether a wearing condition of the wearable apparatus 100 is satisfied based on sensor data of each of an angle sensor and an inertial sensor obtained for a recent predetermined time interval. The wearable apparatus 100 may determine that only a variation that occurs in a direction opposite to a direction in which a substantial variation occurs in the sensor data measured by each of the angle sensor and inertial sensor is actual kinetic energy. For example, the wearable apparatus 100 may determine a motion score based on an angle value of the first angle sensor 524, an angle value of the second angle sensor 524-1, and an angular velocity value of each axis (X-axis, Y-axis, and Z-axis) of the inertial sensor 522. The wearable apparatus 100 may determine whether the user properly wears the wearable apparatus 100 based on a comparison result between the motion score and a threshold value.

When it is determined that the user does not properly wear the wearable apparatus 100, the wearable apparatus 100 may control the driving module 530, 530-1 not to generate torque. When it is determined that the user properly wears the wearable apparatus 100, the wearable apparatus 100 may start generating torque through the driving module 530, 530-1. The illustrated embodiment is a case in which it is determined that the user properly wears the wearable apparatus 100 and shows that first torque for a right leg and second torque for a left leg are generated from a point in time (e.g., a time interval 960) at which it is determined that the wearable apparatus 100 is worn after the time interval 950 when a leg motion of the user is first detected elapses. Thus, the wearable apparatus 100 may not immediately generate torque in the time interval 950 when the motion of the user is first detected but start generating torque after it is determined that the user properly wears the wearable apparatus 100 by performing a test process for determining whether the user properly wears the wearable apparatus 100 based on the sensor data obtained through the sensor module 520 for a predetermined time. Accordingly, a risk of an accident (e.g., an accident in which a leg support frame driven by torque attacks the body of the user) may be reduced, wherein the accident may occur because the wearable apparatus 100 generates torque even though the user does not wear or improperly wears the wearable apparatus 100.

FIG. 10 is a flowchart illustrating a method of controlling a wearable apparatus according to an embodiment. The flowchart of FIG. 10 illustrates operations of a control method of the wearable apparatus 100, after starting operation, for periodically or sporadically determining whether a user properly wears the wearable apparatus 100 to control the wearable apparatus 100 depending on whether the wearable apparatus 100 is worn. In an embodiment, the wearable apparatus 100 may select an exercise (or walking) start through an application of the electronic device 210 and determine whether a user properly wears the wearable apparatus 100 every five seconds while the wearable apparatus 100 is being driven. The phrase "five seconds" is provided merely as an example.

In an embodiment, at least one of operations of FIG. 10 may be simultaneously or parallelly performed with one another, and the order of the operations may be changed. In addition, at least one of the operations may be omitted, or another operation may be additionally performed.

In operation 1010, the wearable apparatus 100 may generate torque to be applied to a leg of the user through the driving module 530, 530-1 of the wearable apparatus 100. For example, operation 1010 of FIG. 10 may correspond to operation 740 of FIG. 7.

In operation 1020, the wearable apparatus 100 may obtain sensor data using the sensor module 520 while the wearable apparatus 100 is being driven. The wearable apparatus 100 may obtain sensor data including motion information of the wearable apparatus 100 using the sensor module 520 during a time interval. In an embodiment, the wearable apparatus 100 may obtain the sensor data at a predetermined time interval. For example, the wearable apparatus 100 may obtain sensor data for testing whether the wearable apparatus 100 is being worn at a predetermined time interval (e.g., every 10 seconds).

In operation 1030, the wearable apparatus 100 may determine a motion score indicating a degree to which the wearable apparatus 100 moves during the time interval based on the sensor data. Operation 1030 corresponds to operation 720 of FIG. 7, and any repeated description related thereto is omitted.

In an embodiment, after the torque starts to be generated, the wearable apparatus 100 may determine whether the user wears the wearable apparatus 100 based on the sensor data obtained at the predetermined time interval. In an embodiment, the wearable apparatus 100 may determine that the user wears the wearable apparatus 100 (1) when the user wears the wearable apparatus 100 and sufficiently moves, (2) when the user moves both legs, and (3) when the user moves a leg only in one direction and then moves the leg in an opposite direction.

In operation 1040, the wearable apparatus 100 may determine whether the motion score satisfies a condition. For example, the wearable apparatus 100 may determine whether the motion score is greater than a threshold value. When the motion score is greater than the threshold value, it may be determined that the condition is satisfied, and when the motion score is less than or equal to the threshold value, it may be determined that the condition is not satisfied. Operation 1040 corresponds to operation 730 of FIG. 7, and any repeated description related thereto is omitted.

The wearable apparatus 100 may control whether the driving module 530, 530-1 of the wearable apparatus 100 generates torque based on the motion score. For example, the wearable apparatus 100 may determine whether to stop generating the torque based on the motion score.

When the motion score does not satisfy the condition ('No' in operation 1040) (e.g., when the motion score is less than or equal to a threshold value), in operation 1050, the wearable apparatus 100 may stop the driving module 530, 530-1 from generating the torque. Thereafter, the wearable apparatus 100 may output a guide notification (e.g., a guide voice) to notify the user of improper wearing of the wearable apparatus 100 and guide proper wearing. When the motion score satisfies the condition ('Yes' in operation 1040) (e.g., when the motion score is greater than the threshold value), the wearable apparatus 100 may return to operation 1010 and continue operating.

Through the above-described control method, the wearable apparatus 100 may prevent or reducing chances of a safety-related accident caused by motions of the first and second leg driving frame 55 and 50 by stopping the planned generation and supply of torque when the user stops the motion.

Each embodiment herein may be used in combination with any other embodiment(s) described herein.

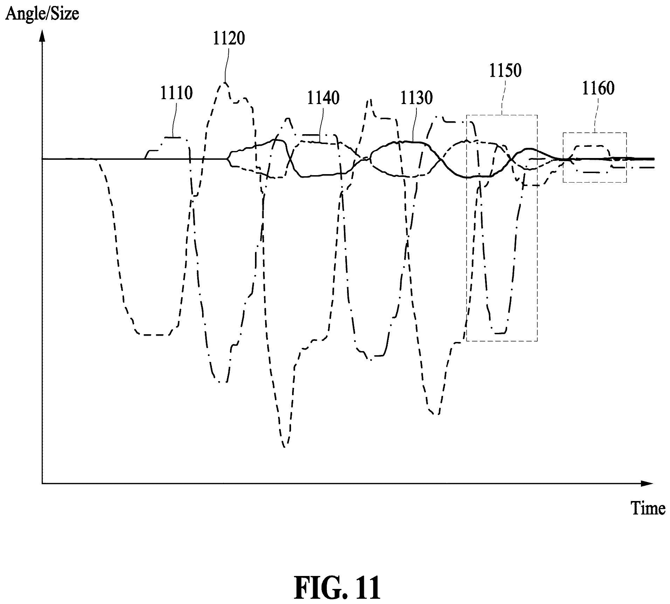

FIG. 11 is a diagram illustrating an example of controlling a wearable apparatus based on a sensor data according to an embodiment. "Based on" as used herein covers based at least on.

FIG. 11 illustrates first sensor data 1120 representing a change in a first angle of the first leg driving frame 55 of the wearable apparatus 100 over time, second sensor data 1110 representing a change in a first angle of the second leg driving frame 50, first torque data 1140 representing a change in first torque to be transmitted to the first leg driving frame 55 by the driving module 530, 530-1, and second torque data 1130 representing a change in second torque to be transmitted to the second leg driving frame 50 by the driving module 530, 530-1.

Even while a user wears the wearable apparatus 100, the wearable apparatus 100 may continuously check whether the user properly wears the wearable apparatus 100. For example, the wearable apparatus 100 may continuously check whether the user wears the wearable apparatus 100 according to the operations described with reference to FIG. 10. When it is determined that the user does not properly wear the wearable apparatus 100 while the wearable apparatus 100 is being driven, the wearable apparatus 100 may stop the driving module 530, 530-1 from generating the torque.

For example, when the wearable apparatus 100 is loosely fastened to a right leg of the user at a predetermined point in time, the first angle of the first leg driving frame 55 may be detected to be a small value, unlike a previous cycle, in a predetermined time interval, such as a time interval 1150. In this case, the wearable apparatus 100 may determine that the wearable apparatus 100 is not properly worn and may stop driving the wearable apparatus 100 to prevent or reducing chances of a safety-related accident. For example, when improper wearing of the wearable apparatus 100 by the user is detected, the wearable apparatus 100 may stop the driving module 530, 530-1 from generating torque or gradually decrease a magnitude of generated torque as in a time interval 1160. First torque and second torque are not generated in the time interval 1160 after the improper wearing of the wearable apparatus 100 by the user is detected in the time interval 1150. Thereafter, the wearable apparatus 100 may enter a standby mode, notify the user of the improper wearing of the wearable apparatus 100, and provide a guide notification to guide proper wearing. The guide notification may be provided in such forms as voice guidance output from the wearable apparatus 100 or a notification output by the electronic device 210 interoperating with the wearable apparatus 100. Then, the wearable apparatus 100 may continuously check whether the user properly wears the wearable apparatus 100. When it is determined that the user properly wears the wearable apparatus 100, the wearable apparatus 100 may exit the standby mode and start the driving of the driving module 530, 530-1 again.

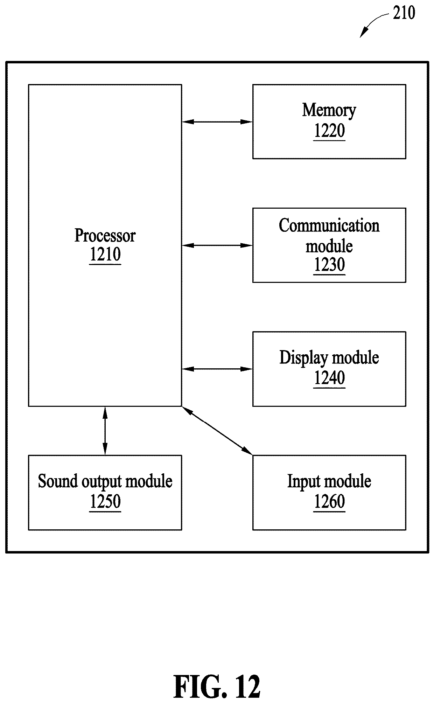

FIG. 12 is a diagram illustrating a configuration of an electronic device, according to an embodiment.

Referring to FIG. 12, an electronic device 210 may include a processor 1210 comprising processing circuitry, a memory 1220, a communication module 1230 comprising communication circuitry, a display module 1240 comprising a display, a sound output module 1250, and an input module 1260. In an embodiment, at least one of the components (e.g., the sound output module 1250) may be omitted from the electronic device 210, or one or more other components (e.g., a sensor module comprising at least one sensor, a haptic module, and a battery) may be added to the electronic device 210.

The processor 1210 may control at least one other component (e.g., a hardware or software component) of the electronic device 210 and may perform various types of data processing or operations. In an embodiment, as at least a part of data processing or operations, the processor 1210 may store instructions or data received from another component (e.g., the communication module 1230) in the memory 1220, process the instructions or the data stored in the memory 1220, and store result data in the memory 1220.

In an embodiment, the processor 1210 may include a main processor (e.g., a CPU or an AP) or an auxiliary processor (e.g., a GPU, an NPU, an ISP, a sensor hub processor, or a CP) that is operable independently of or in conjunction with the main processor.

The memory 1220 may store a variety of data used by at least one component (e.g., the processor 1210 or the communication module 1230) of the electronic device 210. The data may include, for example, a program (e.g., an application), and input data or output data for a command related thereto. The memory 1220 may include at least one instruction executable by the processor 1210. The memory 1220 may include a volatile memory or a non-volatile memory.

The communication module 1230 may support establishing a direct (e.g., wired) communication channel or a wireless communication channel between the electronic device 210 and another electronic device (e.g., the wearable apparatus 100, the other wearable apparatuses 220, and the server 230), and performing communication via the established communication channel. The communication module 1230 may include a communication circuit for performing a communication function. The communication module 1230 may include one or more CPs that are operable independently from the processor 1210 (e.g., an AP) and that support a direct (e.g., wired) communication or a wireless communication. In an embodiment, the communication module 1230 may include a wireless communication module (e.g., a Bluetooth^{™} communication module, a cellular communication module, a Wi-Fi communication module, or a GNSS communication module) that performs wireless communication or a wired communication module (e.g., a LAN communication module or a power line communication (PLC) module). For example, the communication module 1230 may transmit a control command to the wearable apparatus 100 and receive, from the wearable apparatus 100, at least one of sensor data including body motion information of a user wearing the wearable apparatus 100, state data of the wearable apparatus 100, and control result data corresponding to the control command.

The display module 1240 may visually provide information to the outside (e.g., the user) of the electronic device 210. The display module 1240 may include, for example, a light-emitting diode (LCD) or organic light-emitting diode (OLED) display, a hologram device, or a projector device. The display module 1240 may further include a control circuit to control the driving of the display. In an embodiment, the display module 1240 may further include a touch sensor set to sense a touch or a pressure sensor set to sense the intensity of a force generated by the touch. The display module 1240 may output a UI screen to control the wearable apparatus 100 or provide various pieces of information (e.g., exercise evaluation information or setting information of the wearable apparatus 100). In response to the electronic device 210 receiving a notification signal indicating that the wearable apparatus 100 is not properly worn on a body of the user from the wearable apparatus 100, the display module 1240 may output a guide screen to notify the user of improper wearing of the wearable apparatus 100 or to guide proper wearing.

The sound output module 1250 may output a sound signal to the outside of the electronic device 210. The sound output module 1250 may include a guide sound signal (e.g., a driving start sound or an operation error notification sound) based on a state of the wearable apparatus 100 and a speaker for playing music content or a guide voice. In response to the electronic device 210 receiving the notification signal indicating that the wearable apparatus 100 is not properly worn on the body of the user from the wearable apparatus 100, the sound output module 1250 may output a guide voice to notify the user of improper wearing of the wearable apparatus 100 or to guide proper wearing.

The input module 1260 may receive a command or data to be used by another component (e.g., the processor 1210) of the electronic device 210 from the outside (e.g., the user) of the electronic device 210. The input module 1260 may include an input component circuit and receive a user input. The input module 1260 may include, for example, a touch recognition circuit for recognizing a touch on a key (e.g., a button) and/or a screen.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms such as "1^{st}," "2^{nd}", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., by wire), wirelessly, or via at least a third element(s).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more of functions. For example, according to an embodiment, the module may be implemented in a form of an application-specific integrated circuit (ASIC). Thus, each "module" herein may comprise circuitry.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored in a non-transitory computer-readable recording medium. Embodiments as set forth herein may be implemented as software including one or more instructions that are stored in a storage medium that is readable by a machine. For example, a processor of the machine may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A wearable apparatus (100) configured to be worn on a body of a user, the wearable apparatus comprising:
a driving module (530; 530-1), comprising a motor and/or circuitry, configured to generate torque to be applied to the body of the user;
a leg driving frame (50; 55)configured to relay the generated torque to at least a leg of the user;
a thigh fastener (1; 2)connected to the leg driving frame (50; 55) and configured to connect the leg driving frame (50; 55) to the leg of the user;
at least one sensor configured to obtain sensor data comprising motion information of the wearable apparatus (100); and
at least one processor configured to control the driving module (530; 530-1) based on the sensor data,
wherein the at least one processor is configured to:
determine, based on sensor data obtained by the sensor module, information indicating a degree to which the wearable apparatus (100) moves and/or moved; and
control whether to generate the torque based on the determined information.

2. The wearable apparatus (100) of claim 1, wherein the at least one processor is configured to, in response to the wearable apparatus (100) receiving a control command to start driving from an electronic apparatus (210), determine the information, which comprises a motion score, based on sensor data obtained during a time interval after a point in time at which the control command is received.

3. The wearable apparatus (100) of claim 1 or 2, wherein the at least one processor is configured to, in response to a motion of the wearable apparatus (100) being detected after the wearable apparatus (100) is powered on, determine the information, which comprises a motion score, based on sensor data obtained during a time interval after a point in time at which the motion is detected.

4. The wearable apparatus (100) of any one of claims 1 to 3, wherein the at least one processor is configured to determine the information, which comprises a motion score, based on sensor data obtained during a time interval while the torque is being generated.

5. The wearable apparatus (100) of any one of claims 1 to 4, wherein the at least one processor is configured to, in response to the information, which comprises a motion score, being less than or equal to a threshold value, control the driving module (530; 530-1) to not generate the torque and/or to stop generating the torque.

6. The wearable apparatus (100) of any one of claims 1 to 5, wherein the at least one processor is configured to:
determine whether the user properly wears the wearable apparatus (100) based on the information; and
in response to it being determined that the user does not properly the wearable apparatus (100), control the driving module (530; 530-1) to not generate the torque and/or to stop generating the torque.

7. The wearable apparatus (100) of any one of claims 1 to 6, wherein the at least one sensor comprises:
an angle sensor (524; 524-1) configured to obtain sensor data comprising a motion value of the leg driving frame (50; 55); and
an inertial sensor (522) configured to obtain sensor data comprising a motion value of a waist support frame (20) of the wearable apparatus (100),
wherein the at least one processor is configured to determine the information based on at least one of sensor data of the angle sensor (524; 524-1) and sensor data of the inertial sensor (522).

8. The wearable apparatus (100) of claim 7, wherein the at least one processor is configured to:
determine a first cumulative value for a first angular variation of a first leg driving frame (55) and a second cumulative value for a second angular variation of a second leg driving frame (50) based on sensor data of the angle sensor (524; 524-1); and
determine the information based on the first cumulative value and the second cumulative value.

9. The wearable apparatus (100) of claim 8, wherein
the first cumulative value corresponds to a smaller cumulative value between a cumulative value of a positive first angular variation measured during time interval and a cumulative value of a negative first angular variation measured during the time interval, and
the second cumulative value corresponds to a smaller cumulative value between a cumulative value of a positive second angular variation measured during the time interval and a cumulative value of a negative second angular variation measured during the time interval.

10. The wearable apparatus (100) of claim 8, wherein the at least one processor is configured to:
further determine, based on motion value of the waist support frame (20), a third cumulative value of a first motion variation in a first axis direction of the waist support frame (20), a fourth cumulative value of a second motion variation in a second axis direction of the waist support frame (20), and a fifth cumulative value of a third motion variation in a third axis direction of the waist support frame (20); and
determine the information based on the first cumulative value, the second cumulative value, the third cumulative value, the fourth cumulative value, and the fifth cumulative value.

11. The wearable apparatus (100) of claim 10, wherein
the third cumulative value corresponds to a smaller cumulative value between a cumulative value of a positive first motion variation measured during time interval and a cumulative value of a negative first motion variation measured during the time interval,
the fourth cumulative value corresponds to a smaller cumulative value between a cumulative value of a positive second motion variation measured during the time interval and a cumulative value of a negative second motion variation measured during the time interval, and
the fifth cumulative value corresponds to a smaller cumulative value between a cumulative value of a positive third motion variation measured during the time interval and a cumulative value of a negative third motion variation measured during the time interval.

12. The wearable apparatus (100) of claim 10, wherein the information, which comprises a motion score, is based on a result value obtained at least by multiplying the first cumulative value, the second cumulative value, the third cumulative value, the fourth cumulative value, and the fifth cumulative value.

13. The wearable apparatus (100) of claim 7, wherein the at least one processor, in determining the information indicating a degree to which the wearable apparatus (100) moves and/or moved during the time interval, is configured to:
determine a first motion score based on at least one of a first angular variation of a first leg driving frame (55) and a second angular variation of a second leg driving frame (50) during the time interval;
determine a second motion score based on at least one of a first proportion of a motion amount of the first leg driving frame (55) and a second proportion of a motion amount of the second leg driving frame (50) to a total motion amount of both the first leg driving frame (55) and the second leg driving frame (50); and
control whether to generate the torque based on the first motion score and the second motion score.

14. A method of controlling a wearable apparatus (100), the method comprising:
receiving a control command to start driving of the wearable apparatus (100);
in response to the control command being received, obtaining sensor data comprising motion information of the wearable apparatus (100) after a point in time at which the control command is received;
determining a motion score indicating a degree to which the wearable apparatus (100) moves and/or moved based on the sensor data; and
controlling whether the wearable apparatus (100) is to generate torque based on the determined motion score.

15. A method of controlling a wearable apparatus (100), the method comprising:
generating torque to be applied to a leg of a user via a driving module (530; 530-1) of the wearable apparatus (100), the driving module (530; 530-1) comprising a motor and/or circuitry;
obtaining sensor data comprising motion information of the wearable apparatus (100) ;
determining a motion score indicating a degree to which the wearable apparatus (100) moves and/or moved based on the sensor data; and
determining whether to stop generation of the torque based on the determined motion score.
